# EUROPEAN PATENT APPLICATION

(11) **EP 1 195 387 A1**
(43) Date of publication of application: **10.04.2002**
(21) Application number: 00929920.7
(22) Date of filing: 30.05.2000
(51) Int. Cl.: C08F 8/32, C08F 8/46, C09J 123/36, C09J 5/00, C09J 177/00, B32B 27/30

(54) **ADHESIVE RESIN, METHOD OF BONDING, AND LAYERED PRODUCT**

(30) Priority: 31.05.1999 JP 15255399; 29.06.1999 JP 18281199
(71) Applicant: Mitsui Chemicals, Inc., Tokyo 100-6070 (JP)
(72) Inventor: KAWACHI, Hideshi Mitsui Chemicals, Inc., Ichihara-shi, Chiba 299-0108 (JP); SAWADA, Yuji Mitsui Chemicals, Inc., Ichihara-shi, Chiba 299-0108 (JP); SHIGEMOTO, Hiromi Mitsui Chemicals, Inc., Ichihara-shi, Chiba 299-0108 (JP)
(74) Representative: Cresswell, Thomas Anthony
(86) International application number: JP0003477
(87) International publication number: WO0073358

(57) **Abstract**

An adhesive resin obtained by reacting a polyolefin resin (A) having carboxyl groups and/or groups derived therefrom with an amino compound having at least two amino groups, the said adhesive resin being superior in the ability for adhering onto various fluororesins (C) and capable of providing easily laminated products superior in resistance to chemicals and in barriering ability.

## Description

### FIELD OF THE INVENTION

The present invention relates to an adhesive resin which comprises as a main. component a polyolefin resin and is served for adhesion of fluororesins (referred to in the following sometimes simply as the adhesive resin), to a method for adhesion using this adhesive resin, to a laminated product using this adhesive resin and to use of the laminated product.

### BACKGROUND OF THE INVENTION

Fluororesins, such as homopolymers of, for example, tetrafluoroethylene (PTFE), and copolymers of, such as tetrafluoroethylene with ethylene (ETFE), have characteristic properties of weatherability and fire-retardance and are especially superior in the barriering ability against hydrocarbons, alcohols and the like, whereby they reveal characteristic feature of permission of using for fuel pipes in automobile and so on. PTFE and ETFE require, however, a high molding temperature of at least 300 °C and exhibit inferior processibility.

For remedying this problem, a fluorocopolymer (fluororesin) of ternary basis obtained by co-polymerizing tetrafluoroethylene, vinylidene fluoride and hexafluoropropylene (a product of Dainion K.K. with trademark THV) has been developed. This fluororesin exhibits, in addition to the above-mentioned superior characteristic properties, better processibility.

However, the above fluororesin of the stand of the technique has a problem that it reveals almost no capability of adhering onto polyolefin resins and onto maleic anhydride-graft-modified polyethylene resins used most widely as adhesive resin, though it can be bonded with epichlorohydrin rubber or the like by a thermocompression molding.

In WO 96/05964 (corresponding to Japanese Patent Kohyo Hei 10-504595), a technique for bonding a layer containing a fluoropolymer and a layer containing a hydrocarbon polymer is disclosed, which comprises coating over the fluoropolymer-containing layer or over the hydrocarbon polymer-containing layer with a composition containing an aliphatic polyamine and, then, putting the two layers together.

However, the above WO-technique requires bothersome operations due to the requisite coating with the polyamine compound and is difficult to apply for bonding two layers by a simple practice by, for example, co-extrusion molding.

### DISCLOSURE OF THE INVENTION

An object of the present invention is to provide an adhesive resin exhibiting superior ability for adhesion onto fluororesins.

Another object of the present invention is to propose a method for adhesion which can afford to let fluororesins to be adhered easily.

A further object of the present invention is to provide a laminated product in which fluororesin layers are laminated.

A still further object of the present invention is to provide a gasoline tank or a pipe for gasoline, constituted of the above laminated product.

The inventors had proceeded sound researches for solving the problems of the stand of the technique mentioned above and reached the discovery, that a resin product obtained by reacting a polyolefin resin having carboxyl groups and/or groups derived therefrom with a compound having at least two amino groups by mixing them in their molten state exhibits better adhesion onto fluororesins, which has led to the completion of the present invention.

Thus, the present invention consists in the following adhesive resin, method for adhesion, laminated product and use thereof:
(1) An adhesive resin to be used for adhesion of fluororesins (C), comprising a reaction product obtained by reacting a polyolefin resin (A) having carboxyl groups and/or groups derived therefrom with an amino compound (B) having at least two amino groups.
(2) The adhesive resin as defined in the above (1), wherein the polyolefin resin (A) having carboxyl groups and/or groups derived therefrom is reacted substantially homogeneously with the amino compound (B) having at least two amino groups.
(3) The adhesive resin as defined in the above (1) or (2), wherein the reaction product is obtained by reacting the polyolefin resin (A) having carboxyl groups and/or groups derived therefrom with the amino compound (B) having at least two amino groups in a molten state.
(4) The adhesive resin as defined in the above (1) or (2), wherein the reaction product is obtained by reacting the polyolefin resin (A) having carboxyl groups and/or groups derived therefrom with the amino compound (B) having at least two amino groups in a molten state with agitation.
(5) The adhesive resin as defined in any one of the above (1) to (4), wherein the polyolefin resin (A) having carboxyl groups and/or groups derived therefrom is reacted with the amino compound (B) having at least two amino groups, in a weight ratio of 0.01 - 5 parts by weight of the former per 100 parts by weight of the latter.
(6) The adhesive resin as defined in any one of the above (1) to (5), wherein the polyolefin resin (A) having carboxyl groups and/or groups derived therefrom is a graft-modified polyolefin resin (A-1) in which an ethylenically unsaturated carboxylic acid or its derivative (a2) is graft-copolymerized onto a polyolefin resin (a1).
(7) The adhesive resin as defined in any one of the above (1) to (5), wherein the polyolefin resin (A) having carboxyl groups and/or groups derived therefrom is a graft-modified polyethylene resin (A-2) or a graft-modified polypropylene resin (A-3) in which an ethylenically unsaturated carboxylic acid or its derivative (a2) is graft-copolymerized onto a polyethylene resin (a3) or onto a polypropylene resin (a4), respectively.
(8) The adhesive resin as defined in the above (7), wherein the graft-modified polyethylene resin (A-2) is one in which the whole or a part of the polyethylene resin (a3) is graft-modified by the ethylenically unsaturated carboxylic acid or its derivative (a2).
(9) The adhesive resin as defined in the above (8), wherein the graft-modified polyethylene resin (A-2) comprises 99 - 10 parts by weight of a non-modified polyethylene resin (a3-1) and 1 - 90 parts by weight of a graft-modified polyethylene resin in which a polyethylene resin (a3-2) is graft-modified by the ethylenically unsaturated carboxylic acid or the derivative thereof (a2), with the entire mixture amounting to 100 parts by weight.
(10) The adhesive resin as defined in the above (7), wherein the graft-modified polyethylene resin (A-2) comprises 0 - 95 parts by weight of a graft-modified polyolefin resin in which the whole or a part of the polyethylene resin (a3) having a density in the range from 0.860 to 0.895 g/cm³ is graft-modified by the ethylenically unsaturated carboxylic acid or the derivative thereof (a2) and 100 - 5 parts by weight of a graft-modified polyolefin resin in which the whole or a part of the polyethylene resin (a3) having a density in the range from 0.900 to 0.965g/cm³ is graft-modified by the ethylenically unsaturated carboxylic acid or the derivative thereof (a2), with the entire mixture amounting to 100 parts by weight.
(11) The adhesive resin as defined in any one of the above (7) to (10), wherein the polyethylene resin (a3) is composed of a homopolymer of ethylene and/or an ethylene/α -olefin copolymer obtained by co-polymerizing ethylene with an α -olefin of 3 - 20 carbon atoms.
(12) The adhesive resin as defined in the above (9), wherein the polyethylene resin (a3) is a high density polyethylene having a density in the range from 0.955 to 0.965 g/cm³ or is an ethylene/α -olefin copolymer having a density in the range from 0.860 to 0.930 g/cm³.
(13) The adhesive resin as defined in any one of the above (1) to (12), wherein the amino compound (B) having at least two amino groups consists of at least one amino compound selected from the group consisting of polymethylenediamines, aromatic diamines, alicyclic diamines, diethylenetriamine, triethylenetetramine, isophoronediamine, polyetherdiamines and aliphatic primary amines having at least two NH₂ groups.
(14) An adhesive resin comprising 500 parts by weight or less of a non-modified polyolefin resin (D), per 100 parts by weight of the adhesive resin as defined in any one of the above (1) to (13).
(15) The adhesive resin as defined in any one of the above (1) to (14), wherein the fluororesin (C) is a fluorocopolymer which comprises at least two kinds of monomers selected from the group consisting of the monomers represented by the formulae (1) and (2) given below and ethylene: 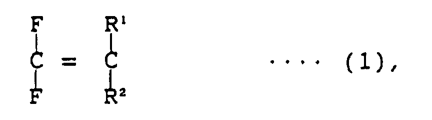 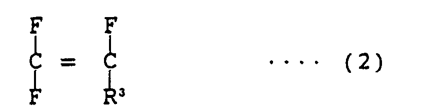 in which R¹ and R² in the formula (1) represent each, independently of each other, hydrogen atom or fluorine atom and R³ in the formula (2) denotes a substituent group represented by CₙF₂ₙ₊₁, with n being an integer of 1 or greater.
(16) The adhesive resin as defined in any one of the above (1) to (14), wherein the fluororesin (C) is a fluorocopolymer which comprises at least one kind of monomer represented by the formula (1) given above and at least one kind of monomer represented by the formula (2) given above.
(17) The adhesive resin as defined in the above (15) or (16), wherein the monomer represented by the formula (1) consists of tetrafluoroethylene, trifluoroethylene and/or vinylidene fluoride and the monomer represented by the formula (2) consists of hexafluoropropylene, octafluorobutene-1 and/or dodecafluorohexene-1.
(18) The adhesive resin as defined in any one of the above (1) to (14), wherein the fluororesin (C) is constituted of at least one kind of the polymers selected from the group consisting of ternary fluorocopolymers in which tetrafluoroethylene, vinylidene fluoride and hexafluoropropylene are co-polymerized; homopolymers of tetrafluoroethylene (PTFE); and copolymers of tetrafuoloethylene with ethylene (ETFE).
(19) A method for adhesion of a fluororesin (C) in which an adhesive resin as defined in any one of the above (1) to (18) is brought into contact with the fluororesin (C) in a state molten with each other.
(20) A method for adhesion of a fluororesin (C) in which an adhesive resin as defined in any one of the above (1) to (18) is brought into contact with the fluororesin (C) by co-extrusion of them into a laminate.
(21) A laminated product in which a layer of the adhesive resin (L_{AB}) as defined in any one of the above (1) to (18) is at least laminated with a fluororesin layer (L_{c}) comprising the fluororesin (C).
(22) A laminated product in which a fluororesin layer (L_{c}) comprising the fluororesin (C) is laminated with a polyolefin resin layer (L_{D}) comprising the polyolefin resin (D) under intermediation by an adhesive resin layer (L_{AB}) comprising the adhesive resin as defined in any one of the above (1) to (18).
(23) A laminated product as defined in the above (21) or (22), wherein the lamination is effected by co-extrusion.
(24) A gasoline tank or a pipe for gasoline, comprising the laminated product as defined in any one of the above (21) to (23).

### « The polyolefin resin (A) having carboxyl groups or groups derived therefrom »

The polyolefin resin (A) having carboxyl groups or groups derived therefrom may preferably be a graft-modified polyolefin resin (A-1) (referred to in the following sometimes simply as the modified polyolefin resin) in which an ethylenically unsaturated carboxylic acid or a derivative thereof (a2) having at least one polymerizable ethylenic unsaturation bond is co-polymerized with a raw polyolefin resin (a1) by a grafting reaction. Concrete examples of the modified polyolefin resin (A-1) include a graft-modified polyethylene resin (A-2) in which the ethylenically unsaturated carboxylic acid or the derivative thereof (a2) is graft-copolymerized onto a polyethylene resin (a3) (referred to in the following sometimes simply as the modified polyethylene resin) and a graft-modified polypropylene resin (A-3) in which the ethylenically unsaturated carboxylic acid or the derivative thereof (a2) is graft-copolymerized onto a polypropylene resin (a4)(referred to in the following sometimes simply as the modified polypropylene resin).

As the polyethylene resin (a3) mentioned above, there may be recited, for example, a homopolymer of ethylene; an ethylene/α -olefin copolymer in which ethylene is co-polymerized with usually not greater than 20 mole % of an α -olefin of 3 or more carbon atoms; and a copolymer of ethylene with an ethylenically unsaturated carboxylic acid or a derivative thereof. As the polypropylene resin (a4) mentioned above, there may be recited, for example, a homopolymer of propylene; a propylene/α -olefin copolymer in which propylene is copolymerized with usually not greater than 20 mole % of an α -olefin of two or more carbon atoms other than propylene; and a copolymer of propylene with an ethylenically unsaturated carboxylic acid or a derivative thereof. For the copolymer, random copolymers and block-copolymers may be employed. As the ethylenically unsaturated carboxylic acid or the derivative thereof mentioned above, those which are identical with the ethylenically unsaturated carboxylic acid or the derivative thereof (a2) described afterward may be employed. For the raw polyolefin resin (a1), homopolymers of ethylene, ethylene/α -olefin copolymers, homopolymers of propylene and propylene/α - olefin copolymers may preferably be used, wherein special preference is given to homopolymers of ethylene and ethylene/ α -olefin copolymers. More concretely, there may be exemplified as the polyethylene resin (a3) a linear low density polyethylene (LLDPE), a polyethylene resin having a density of 0.860 - 0.890 g/cm³, a polyethylene resin having a density of 0.900 - 0.950 g/cm³, a high density polyethylene having a density of 0.955 - 0.965 g/cm³ and an ethylene/ α - olefin copolymer having a density of 0.860 - 0.930 g/cm³. They may be used each alone or in a combination of two or more of them.

In the modified polyolefin resin (A-1), the grafted amount (graft rate) of the ethylenically unsaturated carboxylic acid or the derivative thereof (a2) with respect to the entire modified polyolefin resin (A-1) may favorably be 0.01 to 1 % by weight, preferably 0.05 to 0.6 % by weight. When the grafted amount is within the above range, gellation due to excessive reaction with the amino compound (B) having amino groups in the subsequent process step is suppressed and an adhesive resin exhibiting a better processibility can be obtained.

It is permissible to employ the modified polyolefin resin either solely or in a combination of two or more kinds. For example, two or more kinds of the modified polyolefin resins of different densities may be used in combination. On using a combination of two or more kinds, it is enough that the grafted amount is within the range mentioned above with respect to the entire ' amount of the modified polyolefin resins, wherein' it is permissible that one or more modified polyolefin resins having the grafted amounts outside the range given above are included.

The modified polyolefin resin (A-1) may be one in which the whole of the raw polyolefin resin (a1) is graft-modified by the ethylenically unsaturated carboxylic acid or the derivative thereof (a2) or one in which a part of the raw polyolefin resin (a1) is graft-modified by the ethylenically unsaturated carboxylic acid or the derivative thereof (a2). In the case of the latter, the modified polyolefin resin (A-1) is a mixture of non-modified polyolefin resin and the modified polyolefin resin. In such a mixture, the non-modified polyolefin resin and the raw polyolefin resin (a1) for the modified polyolefin resin may be one and the same resin or be different resins. Here, the grafted amount mentioned above referes to that based on the total amount of the mixture including the non-modified polyolefin resin.

As concrete ones of the modified polyolefin resin (A-1), the followings may be exemplified:
1) A graft-modified polyethylene resin (A-2), in which the whole or a part of the polyethylene resin (a3) is graft-modified by the ethylenically unsaturated carboxylic acid or the derivative thereof (a2).
2) A graft-modified polyethylene resin (A-2) comprising
   99 - 10 parts by weight, preferably 99 - 50 parts by weight, of a non-modified polyethylene resin (a3-1) and
   1 - 90 parts by weight, preferably 1 - 50 parts by weight, of a graft-modified polyethylene resin in which a polyethylene resin (a3-2) is graft-modified by the ethylenically unsaturated carboxylic acid or the derivative thereof (a2),
   wherein the entire mixture amounts to 100 parts by weight and wherein the raw (not yet modified) polyethylene resin (a3-1) and the polyethylene resin (a3-2) may either be the same resin or be different resins.
3) A graft-modified polyethylene resin comprising
   0 - 95 parts by weight, preferably 0 - 50 parts by weight, of a graft-modified polyolefin resin of relatively low density, in which the whole or a part of the polyethylene resin (a3) having a density of 0.860 - 0.895 g/cm³ is graft-modified by the ethylenically unsaturated carboxylic acid or the derivative thereof (a2) and
   100 - 5 parts by weight, preferably 100 - 50 parts by weight, of a graft-modified polyolefin resin of relatively - high density, in which the whole or a part of the polyethylene resin (a3) having a density of 0.900 - 0.965 g/cm³, preferably 0.900 - 0.930 g/cm³, is graft-modified by the ethylenically unsaturated carboxylic acid or the derivative thereof (a2),
   wherein the entire mixture amounts to 100 parts by weight and wherein the graft-modified polyolefin resin of relatively low density may favorably have a melt flow rate (ASTM D 1238, 2.16 kg load, 190 °C) of 2 g/10 min. or higher, preferably 2 - 40 g/10 min., more preferably 2 - 20 g/10 min., and the graft-modified polyolefin resin of relatively high density may favorably have a melt flow rate (ASTM D 1238, 2.16 kg load, 190 °C) of 2 g/10 min. or higher, preferably 2 - 40 g/10 min., wherein the melt flow rate (ASTM D 1238, 2.16 kg load, 190 °C) of the mixture per se may favorably be 2 g/10 min. or higher, preferably 2 - 60 g/10 min., more preferably 2 - 30 g/10 min., and the mixing ratio of [the graft-modified polyolefin resin of relatively low density]/ [the graft-modified polyolefin resin of relatively high density] in weight proportion may favorably be in the range from 0.01/1 to 1/0.01, preferably from 0.1/1 to 1/0.1.

### « The ethylenically unsaturated carboxylic acid or the derivative thereof (a2) »

As the polymerizable ethylenically unsaturated carboxylic acid or the derivative thereof (a2) to be graft-copolymerized onto the raw polyolefin resin (a1), ethylenically unsaturated compounds and the like having carboxyl group and/or group derived therefrom may be recited. There may be enumerated, for example, acrylic acid, methacrylic acid, maleic acid, itaconic acid, citraconic acid, mesaconic acid, maleic anhydride, 4-methylcyclohex-4-en-1,2-dicarboxylic acid anhydride, bicyclo-[2.2.2]oct-5-en-2,3-dicarboxylic acid anhydride, 1,2,3,4,5,8,9,10-octahydronaphthalene-2,3-dicarboxylic acid anhydride, 2-octan-1,3-diketospiro[4,5]non-7-ene, bicyclo[2.2.1]- hept-5-en-2,3-dicarboxylic acid anhydride, maleopimaric acid, tetrahydrophthalic acid anhydride, x-methyl-bicyclo[2.2.1]hept-5-en-2,3-dicarboxylic acid anhydride, x-methyl-norborn-5-en-2,3-dicarboxylic acid anhydride and norborn-5-en-2,3-dicarboxylic acid anhydride. Among them, acid anhydrides are preferred with special preference to maleic anhydride. They may be used each alone or in a mixture of two or more of them.

### « Method for the grafting reaction»

For grafting the grafting monomer selected from the group consisting of ethylenically unsaturated carboxylic acids and derivatives thereof (a2) onto the raw polyolefin resin (a1), methods known so far can be employed. There may be enumerated, for example, a method in which the polyolefin resin (a1) is melted and the grafting monomer is introduced thereinto to effect grafting reaction and a method in which the polyolefin resin (a1) is dissolved in a solvent and the grafting monomer is introduced into the resulting solution to effect grafting reaction. In all cases, it is preferable for realizing the graft-copolymerization with the grafting monomer efficiently to carry out the grafting reaction in the presence of a radical initiator. The grafting reaction is carried out in general under a condition of 60 - 350 °C. The proportion of the radical initiator used may favorably be in general in the range from 0.001 to 1 part by weight per 100 parts by weight of the raw polyolefin resin (a1).

A convenient method for producing the modified polyolefin resin (A-1) comprises extruding the polyolefin resin (a1) for building up the skeleton polymer together with the ethylenically unsaturated carboxylic acid or the derivative thereof (a2) as the grafting monomer and with the radical initiator, such as organic peroxide or a hydrogen peroxide, on a screw extruder of single or plural screws. Here, it is permissible that all the raw materials are mixed preliminarily and the resulting mixture is supplied to the extruder or that the polyolefin resin (a1) is first supplied to the extruder and, then, the ethylenically unsaturated carboxylic acid or the derivative thereof (a2) and the radical initiator are supplied thereto to effect grafting resction.

### «The radical initiator »

As the radical initiator, organic peroxides are preferred. There may be enumerated, for example, benzoyl peroxide, dichlorobenzoyl peroxide, dicumyl peroxide, di-tert-butyl peroxide, 2,5-dimethyl-2,5-di-(peroxybenzoate)hexyne-3, 1,4-bis(tert-butylperoxyisopropyl)benzene, lauroyl peroxide, tert-butyl peracetate, 2,5-dimethyl-2,5-di(tert-butylperoxy)hexyne-3, 2,5-dimethyl-2,5-di(tert-butylperoxy)hexane, tert-butyl perbenzoate, tert-butyl perphenylacetate, tert-butyl perisobutyrate, tert-butyl per-sec-octoate, tert-butyl perpivalate, cumyl perpivalate and tert-butyl perdiethylacetate. For others, azo compounds, such as for example, azobisisobutyronitrile and dimethyl azoisobutyrate, may also be employed.

Among these radical initiators, one which is at the most adapted for each process of grafting reaction should be selected, wherein usually dialkyl peroxides, such as dicumyl peroxide, di-tert-butyl peroxide, 2,5-dimethyl-2,5-di(tert-butylperoxy)hexyne-3, 2,5-dimethyl-2,5-di(tert-butylperoxy)hexane and 1,4-bis(tert-butylperoxyisopropyl)benzene, are used preferably.

### «The amino compound (B)»

The amino compound (B) having at least two amino groups to be used according to the present invention (referred to hereinafter sometimes simply as the amino compound) is an amine having at least two amino groups which are selected from the group consisting of primary amino group (-NH₂), secondary amino group (=NH, namely, imino group) and tertiary amino group (≡ N). As the amino compound (B) to be used according to the present invention, preferably a primary amine in which at least one amino group consists of primary amino group, more preferably a primary diamine which has two primary amino groups and up to 16 carbon atoms and in which at least two carbon atoms are present between the two primary amino groups or, further, an ether bond-containing primary diamine (polyetherdiamine) in which an oxa group (-O-) is interposed between two neighboring methylene groups present at any voluntary position of the above-mentioned primary diamine. When such a primary diamine is used, an adhesive resin exhibiting superior ability for adhering to fluororesins (C) can be obtained.

As the primary diamine to be used favorably as the amino compound (B) mentioned above, there may be enumerated, for example, aromatic diamines each having an aromatic skeleton binding the amino groups, such as phenylenediamine, 4,4'-diaminobiphenyl and di(4-aminophenyl) ether; alicyclic diamines each having a cycloaliphatic skeleton binding the amino groups, such as di(4-aminocyclohexyl)methane and 1,4-diaminocyclo-octane; non-cyclic terminal amino group-containing primary diamines (polymethylenediamines), such as those represented by the formula (4)

H₂N(CH₂)ₙNH₂ (4)

in which n stands for an integer of 2 - 16.

As the polymethylenediamine represented by the formula (4), there may be enumerated, for example, ethylenediamine, trimethylenediamine, tetramethylenediamine, hexamethylenediamine, decamethylenediamine, dodecamethylenediamine and hexadecamethylenediamine.

As the ether bond-containing diamine (polyetherdiamine), in which an oxa group (-O-) is interposed between two neighboring methylene groups present at voluntary psition in a polymethylenediamine, there may be enumerated, for example, 4,9-dioxadodecane-1,12-diamine and the like.

As the amino compound (B), there may also be employed favorably diethylenetriamine, triethylenetetramine, isophoronediamine and such aliphatic primary amines having at least two primary amino groups as those not included in the compounds of formula (4).

The amino compound (B) may be used either alone or in a combination of two or more kinds.

### « The reaction of polyolefin resin (A) having carboxyl groups and/or groups derived therefrom with amino compound (B) »

The polyolefin resin (A) having caboxyl groups and/or groups derived therefrom, for example, the modified polyolefin resin (A-1) will react with the amino compound (B) easily by merely mixing with it to build up the adhesive resin according to the present invention. However, it is preferable to cause the reaction by mixing the two each in a molten state, in order to realize the reaction more uniformly and more efficiently. In a concrete practice, the modified olyolefin resin (A-1) and the amino compound (B) may preferably be melt-blended on a known mixing apparatus, such as Brabendor mixer, Bumbury mixer, roll mill, single screw extruder or double screw extruder, to cause the reaction in a molten state of both the components. The reaction duration may preferably be in the range from 0.5 second to one hour or so. By reacting the polyolefin resin (A) having cayboxyl groups and/or groups derived therefrom with the animo compound (B) in the manner as above, an adhesive resin in which the polyolefin resin (A) and the amino compound (B) are reacted substantially uniformly can easily be obtained.

### « Amount of the amino compound (B) to be used »

The amount of the amino compound (B) to be used should be determined suitably in accordance with the carboxyl group . content in the polyolefin resin (A) having carboxyl groups. If the carboxyl group content is high, the animo compound (B) should be used also in greater amount. Ordinarily, the amino compound (B) to be served for the reaction may preferably be used in an amount in the range from 0.01 to 5 parts by weight, per 100 parts by weight of the modified polyolefin resin (A-1). In terms of the mole ratio of the amino compound (B) relative to the ethylenically unsaturated carboxylic acid or its derivative (a2), a proportion of 0.1 - 3 moles, preferably 0.5 - 2 moles, of the amino compound (B), per one mole of the ethylenically unsaturated carboxylic aicd or its derivative (a2), is favorable. When the proportion of the amino compound (B) is in the above range, an adhesive resin superior in the balance between the adhesiveness and the processibility can be obtained.

### « The adhesive resin»

The adhesive resin according to the present invention obtained as above exhibits a superior ability for adhering onto the fluororesins (C) described afterwards, together with superior adhesive performance onto polyolefin resins, such as the raw polyolefin resin (a1) mentioned above and the polyolefin resin (D) described afterwards, and onto polyketone resins and others. Therefore, it is able to bond such fluororesins (C) with polyolefin resins and others firmly by using the adhesive resin according to the present invention as an adhesive.

The adhesive resin according to the present invention may be compounded with other ingredient(s) to use as an adhesive resin for bonding the fluororesins (C). Such other ingredients may include the raw polyolefin resin (D) described afterwerds. By compounding the raw polyolefin resin (D) therewith, the degree of freedom in the design of resin with respect to the parameters concerning the moldability, such as MFR and so on, is increased and, in addition, an adhesive resin can be obtained at a lower cost. The compounding proportion of the raw polyolefin resin (D) may favorably be chosen in an amount of 500 parts by weight or less, preferably in the range from 100 to 233 parts by weight, per 100 parts by weight of the resulting adhesive resin obtained by reacting the components (A) with (B).

### « The fluororesins (C) »

The fluororesins (C) to which the adhesive resin according to the present invention shows the ability to adhere are polymers or copolymers having fluorine atoms and concrete examples thereof include fluorocopolymers of ternary basis in which tetrafluoroethylene, vinylidene fluoride and hexafluoropropylene are co-polymerized, homopolymers of tetrafluoroethylene (PTFE), copolymers of tetrafluoroethylene with ethylene (ETFE) and homopolymers and copolymers in which the compound of the formula (1) or (2) given above is involved as the monomer.

Concrete examples of the monomer represented by the formula (1) include tetrafluoroethylene, trifluoroethylene and vinylidene fluoride.

Concrete examples of the monomer represented by the formula (2) include hexafluoropropylene, octafluorobutene-1 and dodecafluorohexene-1.

Among the above-given fluororesins (C), those to which the adhesive resin according to the present invention reveals superior ability to adhere and with which they bring about especially firm adhesive strength are fluorocopolymers in which at least two kinds of monomers selected from the group consisting of the monomers represented by the formula (1), the monomers represented by the formula (2) and ethylene are involved. Among them, those in which at the most firm adhesive strength is attained are fluorocopolymers that involve at least one kind of the monomers represented by the formula (1) and at least one kind of the monomers represented by the formula (2). As the former fluorocopolymers, there may be exemplified copolymers of tetrafluoroethylene with ethylene (ETFE) or the like and, as the latter fluorocopolymers, there may be exemplified copolymers of vinylidene fluoride with hexafluoropropylene, copolymers of tetrafluoroethylene, vinylidene fluoride and hexafluoropropylene, and so on.

The fluororesins (C) such as above can be produced by polymerizing the monomers, such as a monomer represented by the formula (1), a monomer represented by the formula (2) and ethylene, by a technique known per se. For example, they can be produced by polymerizing the monomers by a polymerization method, such as suspension or emulsion polymerization, in a pressure autoclave. One typical example of fluororesin obtained as' above is THV (trademark, a fluorocopolymer of ternary basis of Dainion K.K., obtained by co-polymerizing tetrafluoroethylene, vinylidene fluoride and hexafluoropropylene). The adhesive resin according to the present invention exhibits better adhesive performance also onto THV.

### « Method for adhesion »

The adhesive resin according to the present invention is bonded with the fluororesin (C) easily when they are brought into contact with each other at a temperature above their melting point. If one of them is at a temperature below its melting point, no sufficient mutual action is attained and the adhesive strength becomes insufficient. As concrete methods for bonding the adhesive resin according to the present invention with a fluororesin (C), there may be exemplified a compression molding by a press molding machine and a co-extrusion molding in which each of the resins is processed on an individual extruder to cause the resin to melt and the resulting molten resins are joined in the extrusion die so as to laminate them. Among these methods, the co-extrusion molding is preferred, by which the adhesive resin and the fluororesin (C) can be bonded together easily.

As the adhesive resin according to the present invention, a resin as a reaction product obtained by reacting the polyolefin resin (A) having carboxyl groups and/or groups derived therefrom with the amino compound (B) may be used as such, while it is permissible to use this with addition of known additives, such as antioxidant and so on. Also the fluororesin (C) may be used with addition of known additives, such as antioxidant and so on.

### «The laminated product»

The laminated product according to the present invention is obtained by bonding an adhesive resin layer (L_{AB}) comprising the adhesive resin according to the present invention with a fluororesin layer (L_{c}) comprising the fluororesin (C) by the bonding method as above, preferably by a co-extrusion molding.

With the laminated product according to the present invention, a third layer may be laminated on the side reverse to the fluororesin layer (L_{c}) under intermediation by the adhesive resin layer (L_{AB}). There is no restriction for the third layer, so long as the layer can be bonded by the adhesive resin layer (L_{AB}). A voluntary resin which brings about each contemplated property may be selected.

Concrete examples of the third layer include a polyolefin resin layer (L_{D}, which is abbreviated in the following sometimes to PO layer) comprising the polyolefin resin (D), a regrinded layer (recycled layer) in which refuses, such as flash part of the laminated product, are reclaimed, an ionomeric resin layer comprising ionomeric resin, an EVA layer comprising an ethylene/vinyl acetate copolymer (EVA) and an ethylene/ acrylate copolymer layer comprising an ethylene/acrylate copolymer. Among them, polyolefin resin layer (L_{D}) is preferred. As the polyolefin resin (D), one which is identical with the raw polyolefin resin (a1) may be recited. The raw polyolefin resin (a1) and the polyolefin resin (D) to be used in one and the same laminated product may either be the same one or be different ones. Concrete examples of the polyolefin resin (D) include high density polyethylenes (HDPE), linear low density polyethylenes (L-LDPE), high-pressure process low density polyethylenes (HP-LDPE) and polypropylene (PP). The polyolefin resin (D) and other resins can be bonded easily in the same manner as in the case of the fluororesin (C).

The laminated product according to the present invention may be composed of the lamination structures, for example, fluororesin layer/adhesive resin layer, fluororesin layer/adhesive resin layer/PO layer, fluororesin layer/adhesive resin layer/PO layer/ adhesive resin layer/fluororesin layer/, PO layer/ adhesive resin layer/fluororesin layer/adhesive resin layer/PO layer, fluororesin layer/adhesive resin layer/fluororesin layer/adhesive resin layer/PO layer and fluororesin layer/adhesive resin layer/PO layer/ adhesive resin layer/PO layer, though not restricted to the above.

### « Application fields of the laminated product »

The laminated product according to the present invention obtained as above is superior 'in the resistance to chemicals and in the barriering ability inherited from the fluororesin (C) and the laminated product having a polyolefin layer (L_{D}) as the third layer has a secondary processiblity in addition to the resistance to chemicals and barriering ability. Concrete examples of application include bottles for storing chemicals and fuels, such as gasoline, and pipes for conducting fuels. Above all, it is used favorably for gasoline tanks and gasoline conducting pipes.

As explained above, the adhesive resin according to the present invention is obtained by reacting the polyolefin resin (A) having carboxyl groups and/or groups derived therefrom with the amino compound (B) having at least two amino groups and, therefore, has superior ability for adhesion onto fluororesins.

The method for adhesion according to the present invention consists in bringing the adhesive resin into contact with the fluororesin in a molten state, so that bonding of fluororesins can be attained easily.

The laminated product according to the present invention is prepared by laminating a layer or layers of fluororesin with a layer or layers of the adhesive resin, so that laminates composed of a layer or layers of polyolefin and a layer or layers of fluororesin, which have heretofore been able to prepare by prior technique only difficultly, can now be obtained.

The gasoline tanks and gasoline conducting pipes according to the present invention is constituted of the above-mentioned laminated product and, therefore, is superior in the resistance to chemicals and in the barriering ability.

### THE BEST MODE FOR EMBODYING THE INVENTION

Below, the present invention is described by way of Examples.

### EXAMPLE 1

100 parts by weight of a mixture composed of 70 % by weight of an LLDPE [an ethylene/1-butene copolymer having an ethylene content of 96.5 mole % and a 1-butene content of 3.5 mole %, a melt flow rate (MFR, ASTM D 1238, 190 °C, 2.16 kg load) of 20 g/10 min., a density of 0.920 g/cm³] and 30 % by weight of EPR [an ethylene/propylene copoylmer having an ethylene content of 81 mole % and a propylene content of 19 mole %, an MFR (ASTM D 1238, 190 °C, 2.16 kg load) of 22 g/10 min. and a density of 0.870 g/cm³] were mixed with 0.2 part by weight of maleic anhydride and 0.018 part by weight of 2,5-dimethyl-2,5-di(tert-butylperoxy)hexyne-3, (a product of Nippon Oil & Fatsco, Ltd. with trademark PERHEXYNE 25B) on a tumbler mixer homogeneously, whereupon the mixture was melt kneaded on a single screw extruding machine settled at a temperature of 250 °C to obtain a maleic anhydride-graft-modified polyethylene-1 (MAH-PE-1). This modified polyethylene had an MFR (ASTM D 1238, 190 °C, 2.16 kg load) of 11 g/10 min. and the grafted amount thereof was 0.18 % by weight.

4,9-dioxadodecane-1,12-diamine (a product of BASF AG) was used as the amino compound (B) and was reacted with MAH-PE-1 obtained above. Thus, 0.3 part by weight of 4,9-dioxadodecane-1,12-diamine was added to 100 parts by weight of MAH-PE-1 and the mixture was homogenized sufficiently on a tumbler mixer. This mixture was extruded using a double screw extruding machine of 30 mmφ at a rotor revolution rate of 270 r.p.m. under melt kneading at 210 °C. The resulting adhesive resin had an MFR (ASTM D 1238, 190 °C, 2.16 kg load) of 5.5 g/10 min. This adhesive resin was formed into a monolayer film of a thickness of 50 µm by a monolayer casting at 220 °C, which was used for producing the laminated product given below.

As a fluororesin, a monolayer sheet of 500 µm thickness of THV 500G (trademark, a copolymer of tetrafluoroethylene/hexafluoropropylene/vinylidene fluoride with melting point of 170 °C) of Dainion K.K. was used.

As a HDPE, a product press-molded into 2 mm thickness from Hizex 6200B [a product of Mitsui Chemical Inc. with an MFR (ASTM D 1238, 190 °C, 2.16 kg load) of 0.4 g/10 min. and a density of 0.958 g/cm³] was used.

Using the resins given above, a lamination structure of HDPE layer/adhesive resin layer/fluororesin layer/adhesive resin layer/HDPE layer was prepared by laminating the layers in the order given above in a spacer of 4 mm thickness and the resulting laminate was pressed on a press forming machine settled at 240 °C by holding the laminate under a pressure of 5.1 MPa (50 kgf/cm², gauge) for a period of time of 5 minutes. The resulting formed product was then cooled on a water-cooled cooling press forming machine to obtain a laminated product. This laminated product was examined by a peeling test by 90° peeling method at a peeling rate of 50 mm/min. By this, a strength of adhesion between the adhesive resin layer and the fluororesin layer of 12 N/15 mm (1.2 kgf/15 mm) was found and the adhesive resin layer was not able to peel off from the HDPE layer.

### COMPARATIVE EXAMPLE 1

The procedures of Example 1 were pursued except that MAH-PE-1 employed in Example 1 was used as such instead of the adhesive resin employed in Example 1, to attempt to produce a laminated product. However, the MAH-PE-1 layer and the fluororesin layer were not adhered with each other when taken out from the cooling press forming machine.

### INDUSTRIAL APPLICABILITY

The adhesive resin according to the present invention is superior in the ability for adhesion onto fluororesins, so that laminated products in which the adhesive resin layer and the fluororesin layer are bonded firmly can easily be obtained. Such laminated products are superior in the resistance to chemicals and in the barriering ability inherited from the fluororesin and laminated products having a polyolefin resin layer as the third layer exhibit secondary processibility in addition to the resistance to chemicals and the barriering ability. Therefore, the laminated product according to the present invention can favorably be utilized for bottles storing chemicals and fuels, such as gasoline etc., especially for gasoline tanks and gasoline conducting pipes favorably.

## Claims

1. An adhesive resin to be used for adhesion of fluororesins (C), comprising a reaction product obtained by reacting a polyolefin resin (A) having carboxyl groups and/or groups derived therefrom with an amino compound (B) having at least two amino groups.

2. The adhesive resin as claimed in claim 1, wherein the polyolefin resin (A) having carboxyl groups and/or groups derived therefrom is reacted substantially homogeneously with the amino compound (B) having at least two amino groups.

3. The adhesive resin as claimed in claim 1 or 2, wherein the reaction product is obtained by reacting the polyolefin resin (A) having carboxyl groups and/or groups derived therefrom with the amino compound (B) having at least two amino groups in a molten state.

4. The adhesive resin as claimed in claim 1 or 2, wherein the reaction product is obtained by reacting the polyolefin resin (A) having carboxyl groups and/or groups derived therefrom with the amino compound (B) having at least two amino groups in a molten state with agitation.

5. The adhesive resin as claimed in any one of claims 1 to 4, wherein the polyolefin resin (A) having carboxyl groups and/or groups derived therefrom is reacted with the amino compound (B) having at least two amino groups, ,in a weight ratio of 0.01 - 5 parts by weight of the former per 100 parts by weight of the latter.

6. The adhesive resin as claimed in any one of claims 1 to 5, wherein the polyolefin resin (A) having carboxyl groups and/or groups derived therefrom is a graft-modified polyolefin resin (A-1) in which an ethylenically unsaturated carboxylic acid or its derivative (a2) is graft-copolymerized onto a polyolefin resin (a1).

7. The adhesive resin as claimed in any one of claims 1 to 5, wherein the polyolefin resin (A) having carboxyl groups and/or groups derived therefrom is a graft-modified polyethylene resin (A-2) or a graft-modified polypropylene resin (A-3) in which an ethylenically unsaturated carboxylic acid or its derivative (a2) is graft-copolymerized onto a polyethylene resin (a3) or onto a polypropylene resin (a4), respectively.

8. The adhesive resin as claimed in claim 7, wherein the graft-modified polyethylene resin (A-2) is one in which the whole or a part of the polyethylene resin (a3) is graft-modified by the ethylenically unsaturated carboxylic acid or its derivative (a2).

9. The adhesive resin as claimed in claim 8, wherein the graft-modified polyethylene resin (A-2) comprises 99 - 10 parts by weight of a non-modified polyethylene resin (a3-1) and 1 - 90 parts by weight of a graft-modified polyethylene resin in which a polyethylene resin (a3-2) is graft-modified by the ethylenically unsaturated carboxylic acid or the derivative thereof (a2), with the entire mixture amounting to 100 parts by weight.

10. The adhesive resin as claimed in claim 7, wherein the graft-modified polyethylene resin (A-2) comprises 0 - 95 parts by weight of a graft-modified polyolefin resin in which the whole or a part of the polyethylene resin (a3) having a density in the range from 0.860 to 0.895 g/cm³ is graft-modified by the ethylenically unsaturated carboxylic acid or the derivative thereof (a2) and 100 - 5 parts by weight of a graft-modified polyolefin resin in which the whole or a part of the polyethylene resin (a3) having a density in the range from 0.900 to 0.965 g/cm³ is graft-modified by the ethylenically unsaturated carboxylic acid or the derivative thereof (a2), with the entire mixture amounting to 100 parts by weight.

11. The adhesive resin as claimed in any one of claims 7 to 10, wherein the polyethylene resin (a3) is composed of a homopolymer of ethylene and/or an ethylene/α -olefin copolymer obtained by copolymerizing ethylene with an α -olefin of 3 - 20 carbon atoms.

12. The adhesive resin as claimed in claim 9, wherein the polyethylene resin (a3) is a high density polyethylene having a density in the range from 0.955 to 0.965 g/cm³ or is an ethylene/α -olefin copolymer having a density in the range from 0.860 to 0.930 g/cm³.

13. The adhesive resin as claimed in any one of claims 1 to 12, wherein the amino compound (B) having at least two amino groups consists of at least one amino compound selected from the group consisting of polymethylenediamines, aromatic diamines, alicyclic diamines, diethylenetriamine, triethylenetetramine, isophoronediamine, polyetherdiamines and aliphatic primary amines having at least two NH₂ groups.

14. An adhesive resin comprising 500 parts by weight or less of a non-modified polyolefin resin (D) per 100 parts by weight of the adhesive resin as claimed in any one of claims 1 to 13.

15. The adhesive resin as claimed in any one of claims 1 to 14, wherein the fluororesin (C) is a fluorocopolymer which comprises at least two kinds of monomers selected from the group consisting of the monomers represented by the formulae (1) and (2) given below and ethylene:. 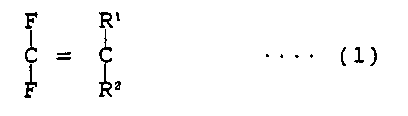 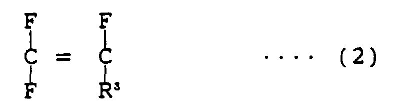 in which R¹ and R² in the formula (1) represent each, independently of each other, hydrogen atom or fluorine atom and R³ in the formula (2) denotes a substituent group represented by CₙF₂ₙ₊₁, with n being an integer of 1 or greater.

16. The adhesive resin as claimed in any one of claims 1 to 14, wherein the fluororesin (C) is a fluorocopolymer which comprises at least one kind of monomer represented by the formula (1) given below and at least one kind of monomer represented by the formula (2) given below: 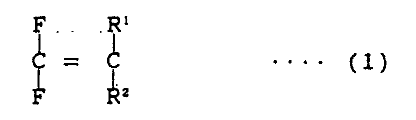 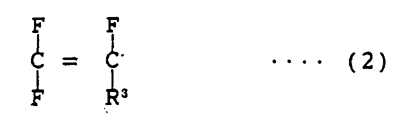 in which R¹ and R² in the formula (1) represent each, independently of each other, hydrogen atom or fluorine atom and R³ in the formula (2) denotes a substituent group represented by CₙF₂ₙ₊₁, with n being an integer of 1 or greater.

17. The adhesive resin as claimed in claim 15 or 16, wherein the monomer represented by the formula (1) consists of tetrafluoroethylene, trifluoroethylene and/or vinylidene fluoride and the monomer represented by the formula (2) consists of hexafluoropropylene, octafluorobutene-1 and/or dodecafluorohexene-1.

18. The adhesive resin as claimed in any one of claims 1 to 14, wherein the fluororesin (C) is constituted of at least one kind of the polymers selected from the group consisting of ternary fluorocopolymers in which tetrafluoroethylene, vinylidene fluoride and hexafluoropropylene are co-polymerized; homopolymers of tetrafluoroethylene (PTFE); and copolymers of tetrafuoloethylene with ethylene (ETFE).

19. A method for adhesion of a fluororesin (C) in which an adhesive resin as claimed in any one of claims 1 to 18 is brought into contact with the fluororesin (C) in a state molten with each other.

20. A method for adhesion of a fluororesin (C) in which an adhesive resin as claimed in any one of claims 1 to 18 is brought into contact with the fluororesin (C) by co-extrusion of them into a laminate.

21. A laminated product in which a layer of the adhesive resin (L_{AB}) as claimed in any one of claims 1 to 18 is at least laminated with a fluororesin layer (L_{c}) comprising the fluororesin (C).

22. A laminated product in which a fluororesin layer (L_{c}) comprising the fluororesin (C) is laminated with a polyolefin resin layer (L_{D}) comprising the polyolefin resin (D) under intermediation by an adhesive resin layer (L_{AB}) comprising the adhesive resin as claimed in any one of claims 1 to 18.

23. A laminated product as claimed in claim 21 or 22, wherein the lamination is effected by co-extrusion.

24. A gasoline tank or a pipe for gasoline, comprising the laminated product as claimed in any one of claims 21 to 23.
